# EUROPÄISCHE PATENTSCHRIFT

(11) **EP 1 927 286 B1**
(45) Veröffentlichungstag und Bekanntmachung des Hinweises auf die Patenterteilung: **19.01.2011**
(21) Anmeldenummer: 07020941.6
(22) Anmeldetag: 25.10.2007
(51) Int. Cl.: A01N 25/34, A01N 59/16, C11D 3/00, C11D 17/04

(54) **Verwendung eines textilen mikrobioziden Speichers**
Utilisation of a textile microbiocide repository
Utilisation d'une mémoire microbicide textile

(30) Priorität: 30.11.2006 DE 102006056977
(43) Veröffentlichungstag der Anmeldung: 04.06.2008
(73) Patentinhaber: Smart Fiber AG, 07407 Rudolstadt (DE)
(72) Erfinder: Markwitz, Hardy, 07407 Rudolstadt (DE); Kolbe, Axel, 07924 Neundorf (DE)
(74) Vertreter: Prietsch, Reiner

(56) Entgegenhaltungen:
- WO-A-2006/013378
- DE-A1- 10 140 772
- DE-A1- 10 315 749
- US-A1- 2002 006 887
- US-A1- 2003 050 212
- US-B1- 6 228 389

## Beschreibung

Die Erfindung betrifft die Verwendung einen mikrobioziden Speichers aus textilen Materialien, die Silberionen an eine wässrige Phase abgeben können.

Es ist bekannt, dass Schwermetallionen wie z. B. Silber-, Quecksilber-, Kupfer-, Zink- und Zirkoniumionen auf Mikroorganismen wie Bakterien, Viren, Pilze und Sporen abtötend oder wachstumshemmend wirken (Thurman et. al., CRC Crit. Rev. In Environ. Contr. 18 (4), S. 295-315 (1989)). Für eine bakterizide Wirkung sind die Silberionen von besonderem Interesse. Der entscheidende Vorteil von Silberionen gegenüber anderen bakterizid wirkenden Metallionen, wie z. B. Hg²⁺, ist die weitestgehende Unempfindlichkeit des menschlichen Metabolismus gegenüber Silber. Die bakterizid wirkende Konzentration wird bei Silber mit 0,01 - 1 mg/l angegeben (Ullman's Encyclopedia of Industrial Chemistry (5. Aufl.), VCH 1993, Volume A 24, S. 160).

Diese Wirkung der Silberionen wird seit langem in den unterschiedlichsten Anwendungen genutzt. Für den Einsatz in Waschmaschinen werden unterschiedliche Silberdotierungen beschrieben. In JP 2005 261 830 A wird ein elektrischer Silberionengenerator beschrieben, um das Waschwasser mit Silberionen anzureichern. Die gewählte Position zwischen Wasserversorgung und Waschmaschine ist nur nachvollziehbar, wenn z.B. Regenwasser oder verkeimtes Brunnenwasser verwendet wird, da Trinkwasser weitestgehend keimfrei ist und eine Verkeimung der Waschmaschine durch lange Betriebspausen und nicht während der Benutzung entsteht. Diese Lösung setzt in jedem Fall auch eine Stromquelle voraus.

Ein weiterer Weg ist der Einsatz von Nano-Silber, wie in KR 10 2005 114 811 A, KR 10 2004 093 956 A, KR 10 2004 093 958A und KR 10 2004 086 672 A beschrieben. Die Oberfläche des Silbers wird durch die extrem kleinen Körner stark erhöht. Die wirksamen Silberionen werden durch eine oberflächliche Oxidation gebildet. Dieser Prozess weist als entscheidenden Nachteil die fehlende Steuerung der Gleichgewichtskonzentration der Silberionen im Waschwasser auf. Kommerziell ist die Überführung von Silber in Nanoteilchen aufwendig und teuer.

Die Adsorbtion von Silberionen an anorganische Träger ist aus der JP 5 111 595 A bekannt. Dort werden Bauteile der Waschmaschine mit einem bakteriziden Mittel und einem Rostschutzmittel ausgerüstet. Die Wirkung bezieht sich nur auf die Bauteile der Waschmaschine.

Aus der DE 101 40 772 A sind silberhaltige Lyocell-Fasern bekannt, die zu textilen Produkten verarbeitet werden können, welche antibakterielle und/oder fungizide Eigenschaften haben.

Aus "Thüringisches Institut für Textil- und Kunststoff-Forschung e.V., Jahresbericht 2004", Seite 8, sind bakterizid wirkende, silbermodifizierte Lyozell-Fasern und damit ausgerüstete Materialien z.B. für Luftfilter und Textilien für medizinische Anwendungen bekannt.

Aus Burchardt, A. "Der Stoff, aus dem Pilz-Albträume sind", Jena Derma News (2004), Vol. 12, S. 4 ist eine silber- und zellulosehaltige Faser mit pilz- und bakterienbekämpfenden Eigenschaften bekannt.

Aus der DE 103 15 749 A1 ist die Verwendung von, textilen Flächengebilden aus mit Silberionen beladenen zellulosischen Formkörpern in wässrigen Lösungen bekannt.

Aus der US 2003/00 50 212 A ist ein Waschhilfsmittel bekannt, das an die wässrige Phase Silberionen abgibt, die von der Wäsche adsorbiert werden.

Aus der AT 413 818 B sind zellulosische Formkörper bekannt, die Silberionen enthalten und zu textilen Artikeln mit antibakteriellen Eigenschaften verarbeitet werden können.

Aus der US 2006/01 71 996 A sind Textilien mit pektinhaltigen Zellulosefasern bekannt, die aufgrund gebundener Silberionen antibakterielle Eigenschaften aufweisen.

Aus der WO 2006/013 378 sind Lyozell-Fasern bekannt, die Silberionen enthalten und zu antibakteriell wirkenden Textilien verarbeitbar sind, die u.a. für Bekleidungsstücke, Haushalts- und Krankenhauswäschestücke und textile Bodenbeläge verwendbar sind.

Aus der DE 10 2005 002 539 A sind Verfahren zur Behandlung von mit Silber beladenen Textilsubstraten bekannt.

Der Erfindung liegt die Aufgabe zu Grunde, Produkte, wie Textilien, Geschirr und andere Gebrauchsgegenstände oder biologisches Material wie z. B. Schnittblumen mit einem verbesserten Schutz gegen die Besiedelung und/oder den Bewuchs durch Bakterien auszustatten.

Diese Aufgabe ist durch die im Anspruch 1 angegebene Verwendung eines textilen mikrobioziden Speichers gelöst.

Überraschenderweise hat sich gezeigt, dass die Silberionen in einem schnellen Prozess von dem textilen Speichermaterial über die wässrige Phase auf z. B. Textilien oberflächlich aufziehen und diese keimhemmend ausrüsten. Dieser Effekt kann sehr vorteilhaft beim maschinellen Waschen in einer Waschmaschine und ebenso bei der Handwäsche genutzt werden. Eine Verwendung des textilen Speichermaterials in der Spülmaschine (maschinelle Geschirrreinigung) oder in der Spüle (manuelle Geschirrreinigung) überträgt gleichfalls Silberionen auf die gereinigten Gegenstände und erschwert eine Wiederbesiedelung mit Bakterien.

Der biozide oder bakteriostatische Effekt tritt auch bei biologischen Materialien auf. Besonders deutlich wirkt er sich bei Schnittblumen aus. Die aus dem Speichermaterial über die wässrige Phase übertragenen Silberionen ziehen oberflächlich auf die Stiele von Schnittblumen auf und erschweren die Besiedelung mit Bakterien, die durch Ihren Stoffwechsel die Wasserleitungsbahnen zersetzen und die Pflanze vorzeitig welken lassen.

Vorteilhafte Ausgestaltungen sind im Einzelnen in den Ansprüchen 2 bis 6 angegeben.

Durch die Verwendung von Ionentauscherpartikeln auf Polyacrylatbasis in einem festen Verbund mit einer Cellulosematrix können Silber-Ionen in Konzentrationen bis zu 10% (w/w) auf diese Faser aufgebracht werden. Durch die Verwendung von Cellulose als hydrophiles netzwerkbildendes Polymer sind alle Ionentauscherpartikel, ob im Inneren oder an der Oberfläche der Faser, während der Wäsche für den Ionentausch voll zugänglich. Die Gleichgewichtskonzentration der Silberionen erreicht den biologisch wirksamen Bereich. Durch die starke Wechselwirkung des Ionenaustauscherpolymers mit den Silberionen werden die Silberionen langsam über viele Wäschen abgegeben. Dabei wurden nach 100 Wäschen bei 60°C noch 46 % des Silberdepots analysiert, wobei die Wirksamkeit weiterhin belegbar ist. Überraschenderweise konnte belegt werden, dass sich über den gegenwärtigen Stand der Technik hinaus die Silberionen in geringsten Konzentrationen auf der Oberfläche der Textilien ablagern und dass der bakterizide Effekt über den eigentlichen Waschschritt mit einer Verringerung der Keimzahl im Waschwasser und auf dem Textil hinaus geht. Der Einsatz von 0,01-100 g, vorzugsweise 5 g Fasern direkt zum Waschgut reicht für diesen Effekt aus. Die Fasern können als Bestandteil eines Vlieses, Gewirks oder Gewebes zugesetzt werden. Eine Umhüllung durch eine wasserdurchlässige Kunststoff- oder Textilhülle ist ebenfalls denkbar. Generell sind Konstruktionen möglich, die einen Wasserzutritt zur Trägerfaser ermöglichen, dabei sind auch durchlässige Behälter aus Glas, Keramik, Metall oder Naturprodukte (z.B. Bast, Holz, Horn, Knochen, Schildpatt, Chitin), weiterhin Mineralien und Halbedelsteine denkbar.

Zur weiteren Verdeutlichung der Erfindung und der für die Verwendung wesentlichen Eigenschaften dienen die folgenden Beispiele. Das verwendete Material "Smartcel bioactive" besteht aus Zellulosefasern mit Anteilen von ionentauschergebundenen Silberionen, hergestellt insbesondere nach dem Aminoxid-Verfahren, vgl. z.B. US 4 246 221 A und EP 1 358 371 A.

### Beispiel 1:

12,5 g Vlies mit einem Anteil 0,625 g Smartcel bioactive wurden mit einem Baumwollgewebe einer Standardindustriewäsche unterzogen. Als Vergleich wurde der Waschversuch ohne Smartcel bioactive-Vlies wiederholt. Die Keimwachstumswerte für 18h wurden für den Testkeim Staphylococcus aureus ATCC 6538 bestimmt. In Tabelle 1 sind die Ergebnisse zusammengefasst.

**Tabelle 1: Übertragung des antimikrobiellen Effekts von einem Vlies auf ein Baumwollgewebe.**

| | Baumwollgewebe mit Vlies gewaschen | Baumwollgewebe ohne Vlies gewaschen | Kontrolle Polyester |
|---|---|---|---|
| Keimzahl 0h | 2,23*10⁵ | 2,23*10⁵ | 2,23*10⁵ |
| Keimzahl 18 h | 1,07*10³ | 9,59*10⁵ | 2,48*10⁵ |
| Gesamtaktivität | 2,36 | -0,59 | - |
| Beurteilung | Signifikante antimikrobielle Aktivität | Keine antimikrobielle Aktivität | |

### Beispiel 2

Ein Pad, bestehend aus 5 g in ein Gewebe eingenähter Smartcel bioactive Fasern, wurde 100 Waschzyklen bei 60 °C unter Normbedingungen unterworfen. Anschließend wurde ein Baumwollgewebe zusammen mit dem Pad und ein weiteres Baumwollgewebe ohne Pad gewaschen. Die beiden Versuchsmuster wurden auf die spezifische antimikro-bielle Aktivität gegenüber Staphylococcus aureus ATCC 6538 und Klebsiella pneumoniae ATCC4352 getestet. In Tabelle 2 sind die Ergebnisse zusammengefasst.

**Tabelle 2: Übertragung des antimikrobiellen Effekts von einem Smartcel bioactive-Pad auf ein Baumwollgewebe unter Langzeitbedingungen.**

| | Baumwollgewebe mit Pad gewaschen | Baumwollgewebe ohne Pad gewaschen | Kontrolle Polyester |
|---|---|---|---|
| Staphylococcus aureus | | | |
| Keimzahl 0h | 3,64*10⁴ | 3,64*10⁴ | 1,06*10⁵ |
| Keimzahl 18 h | 1,47*10³ | 2,35*10⁶ | 3,13*10⁵ |
| Beurteilung | Starke spezifische antimikrobielle Aktivität | Keine antimikrobielle Aktivität | |

| Klebsiella pneumoniae | | | |
|---|---|---|---|
| Keimzahl 0h | 9,01*10⁴ | 9,01*10⁴ | 1,04*10⁵ |
| Keimzahl 18 h | 1,29*10⁴ | 2,58*10⁷ | 1,89*10⁷ |
| Beurteilung | Starke spezifische antimikrobielle Aktivität | Keine antimikrobielle Aktivität | |

In den Pads konnten nach 100 Wäschen noch 126 mg Silber/Pad analysiert werden, dass entspricht 46 % des Ausgangswertes. Nach 80 Wäschen betrug dieser Wert noch 53 %. Diese Abnahme entspricht dem Gleichgewichtszustand. Es kann davon ausgegangen werden, dass vom Pad ca. 1 mg Silberionen pro Waschgang abgegeben wird. Diese Menge reicht nach den durchgeführten Tests aus, um ein normales Textil antimikrobiell auszustatten. Das Pad kann rechnerisch für mind. 220 Waschzyklen verwendet werden, bevor sich der erfindungsgemäße Effekt erschöpft.

### Beispiel 3

Ein Vlies mit einem Gewicht von 0,5 g und einem Anteil von 0,05 g silberhaltigen textilem Speichermaterial (Smartcel bioactive) wurde einer mit Wasser gefüllten Blumenvase mit frischen Schnittblumen beigefügt. Im Vergleich zu einer Referenzprobe ohne Pad blieben die Schnittblumen durchschnittlich drei Tage länger frisch (Kriterium sichtbares Welken und Absinken der Blüte). Außerdem fehlte weitgehend der bekannte unangenehme Blumenwassergeruch, da die bakteriellen Zersetzungsprozesse verlangsamt und hinausgezögert werden.

## Patentansprüche

1. Verwendung eines textilen mikrobioziden Speichers aus Fasern, bestehend aus einem festen Verbund von mit Silberionen beladenen Ionenaustauscherpartikeln mit einer Zellulose-Matrix, zur Erzielung einer bakteriostatischen Wirkung auf Produktoberflächen durch Einbringen des in einer wasserdurchlässigen Umhüllung befindlichen Speichers und des Produktes in eine wässrige Phase, um Silberionen auf die Produktoberflächen zu übertragen.

2. Verwendung nach Anspruch 1, **dadurch gekennzeichnet, dass** die Fasern des mikrobioziden Speichers Lyocellfasern sind.

3. Verwendung nach Anspruch 1 oder 2, **dadurch gekennzeichnet, dass** die Fasern in Form eines Vlieses, Gewirkes oder textilen Gewebes vorliegen.

4. Verwendung nach einem der Ansprüche 1 bis 3, **dadurch gekennzeichnet, dass** die Ionenaustauscherpartikel solche auf Polyacrylatbasis sind.

5. Verwendung des mikrobioziden Speichers nach einem der Ansprüche 1 bis 4 in einer Waschmaschine oder einem Geschirrspüler.

6. Verwendung des mikrobioziden Speichers nach einem der Ansprüche 1 bis 4 in einer wassergefüllten Vase für Schnittblumen.

## Claims

1. The use of textile a microbicidal storage device made of fibers, consisting of a solid bond of ion exchanger particles loaded with silver ions with a cellulose matrix for achieving a bacteriostatic effect on product surfaces by introducing the storage device disposed in a water-permeable shell and the product into a hydrous phase in order to transfer silver ions to the product surfaces.

2. The use according to claim 1, **characterized in that** the fibers of the microbicidal storage device are lyocell fibers.

3. The use according to claim 1 or 2, **characterized in that** the fibers are present in the form of a non-woven material, a knitted fabric or a textile fabric.

4. The use according to one of the claims 1 to 3, **characterized in that** the ion exchanger particles are such on the basis of polyacrylate.

5. The use of the microbicidal storage device according to one of the claims 1 to 4 in a washing machine or a dishwasher.

6. The use of the microbicidal storage device according to one of the claims 1 to 4 in a water-filled vase for cut flowers.

## Revendications

1. Utilisation d'une réserve microbicide textile faite de fibres, composée d'un composite solide de particules échangeuses d'ions chargées d'ions argent avec une matrice en cellulose, pour obtenir un effet bactériostatique sur des surfaces de produits par introduction de la réserve se trouvant dans une enveloppe perméable à l'eau et du produit dans une phase aqueuse pour transférer des ions argent sur les surfaces du produit.

2. Utilisation selon la revendication 1, **caractérisée en ce que** les fibres de la réserve microbicide sont des fibres de lyocell.

3. Utilisation selon la revendication 1 ou 2, **caractérisée en ce que** les fibres se présente sous la forme d'un non-tissé, d'un tricot ou d'une toile textile.

4. Utilisation selon l'une des revendications 1 à 3, **caractérisée en ce que** les particules échangeuses d'ions sont à base de polyacrylate.

5. Utilisation de la réserve microbicide selon l'une des revendications 1 à 4 dans une machine à laver ou un lave-vaisselle.

6. Utilisation de la réserve microbicide selon l'une des revendications 1 à 4 dans un vase rempli d'eau pour fleurs coupées.
